# EUROPÄISCHE PATENTANMELDUNG

(11) **EP 1 176 051 A2**
(43) Veröffentlichungstag der Anmeldung: **30.01.2002**
(21) Anmeldenummer: 01117328.3
(22) Anmeldetag: 18.07.2001
(51) Int. Cl.: B60N 3/10

(54) **Kühlbehälter für Fahrzeuge**

(30) Priorität: 26.07.2000 DE 10036266
(71) Anmelder: DaimlerChrysler AG, 70567 Stuttgart (DE)
(72) Erfinder: Dürr, Bernhard, 75365 Calw-Stammheim (DE); Emhardt, Frank, 70569 Stuttgart (DE); Gaus, Hermann, Prof., 70619 Stuttgart (DE); Geisel, Thomas, 72108 Rottenburg (DE); Leucht, Rainer, 73666 Baltmannsweiler (DE); Schrom, Ralf-Henning, 72108 Rottenburg (DE); Tiefenbacher, Rainer, 71144 Steinenbronn (DE)

(57) **Zusammenfassung**

Die Erfindung betrifft einen Kühlbehälter für Fahrzeuge, der seitlich neben dem Sitzkissen eines Fahrzeugsitzes angeordnet und dessen Kühlraum nach Öffnen eines Deckels von oben durch eine Behälteröffnung zugänglich ist, wobei der Kühlraum mindestens zur Unterbringung einer der Länge nach in ihm abgelegten, handelsüblichen Getränkeflasche ausreicht und eine den Flaschendurchmesser deutlich übersteigende Tiefe aufweist. Des weiteren reicht der Kühlraum mindestens zur Unterbringung einer der Länge nach in ihm abgelegten, handelsüblichen Getränkeflasche aus, weist aber zur Unterbringung der stehenden Getränkeflasche unterhalb des geschlossenen Deckels eine zu geringe Tiefe auf.
Erfindungsgemäß sind im Kühlraum des Kühlbehälters Haltemittel angeordnet, um die Getränkeflasche unterhalb des geschlossenen Deckels in einer griffbereiten Ablagestellung festzulegen, in der sich die Getränkeflasche mit ihrem Flaschenhals auf einen griffgünstig angeordneten Endbereich des Kühlraums zu schräg nach oben erstreckt. Als Deckel des Kühlbehälters ist eine Deckelanordnung vorgesehen, mit der in einer geschlossenen Stellung auch die nach oben aus der Behälteröffnung herausstehende Getränkeflasche zumindest weitgehend überdeckt ist

## Beschreibung

Die Erfindung betrifft einen Kühlbehälter für Fahrzeuge gemäß dem Oberbegriff der Patentansprüche 1 und 2.

Aus der DE 296 05 954 U1 ist ein derartiger Kühlbehälter für Fahrzeuge bekannt, dessen Kühlraum nach Öffnen eines Deckels von oben zugänglich ist. Für eine platzsparende Anordnung des Kühlbehälters im Fahrzeug befindet sich der Kühlbehälter vorzugsweise neben einem Fahrzeugsitz, so daß eine bequeme Erreichbarkeit durch den Fahrgast im Prinzip möglich ist. Dabei ist vorgesehen, den Kühlbehälter als Mittelarmlehne anzuordnen, wobei die Oberseite des Deckels die Auflagefläche der Armlehne bildet. Die Höhe des Kühlraums im Behälter ist so bemessen, daß handelsübliche Getränkeflaschen darin bei geschlossenem Deckel liegend transportiert werden können.

Die Zugänglichkeit der Getränkeflasche im Kühlraum kann jedoch erheblich erschwert sein, wenn oberhalb der abgelegten Flasche noch weitere zu kühlende Gegenstände abgelegt sind. Außerdem können Getränkeflaschen, welche die Länge des Kühlraums übersteigen, in dem bekannten Kühlbehälter nicht ohne weiteres transportiert werden. Gleiches gilt für Getränkeflaschen, die nach dem Öffnen nicht oder nur unzureichend wieder verschließbar sind, wie beispielsweise entkorkte Sekt- oder Weinflaschen, und daher beim liegenden Transport auslaufen können.

Der Erfindung liegt daher die Aufgabe zugrunde, einen gattungsgemäßen Kühlbehälter für Fahrzeuge unter Beibehaltung kompakter Abmessungen dahingehend weiterzuentwickeln, daß er ohne Einbußen beim Nutzkomfort auch zum Transport längerer handelsüblicher Getränkeflaschen geeignet ist.

Diese Aufgabe wird erfindungsgemäß jeweils mit den Merkmalen der Patentansprüche 1 und 2 gelöst.

Vorteilhafte Ausgestaltungen der Erfindung lassen sich aus den übrigen Ansprüchen entnehmen

Durch entsprechende Haltemittel wird eine Getränkeflasche in einer etwa diagonalen Lage im Kühlraum so fixiert, daß der Flaschenhals dem Fahrgast in einer erhöhten und daher besonders griffgünstigen Position dargeboten wird. Aufgrund der diagonalen Anordnung benötigt die Getränkeflasche dabei nur einen Kühlraum, der kürzer sein kann als die Flasche selbst. Der griffgünstig angeordnete Flaschenhals bleibt außerdem bei zusätzlicher Beladung des Kühlraums leichter zugänglich als bei einer liegenden Position der Getränkeflasche. Zur Erhöhung des Nutzkomforts trägt außerdem bei, daß die geöffnete Getränkeflasche unter Aufrechterhaltung der Kühlung stehend im Kühlraum transportiert werden kann, wobei die problemlose Zugänglichkeit ebenfalls gewährleistet ist.

Durch eine Gestaltung des Anmeldegegenstandes nach den Merkmalen der Patentansprüche 1 und 2 wird eine Kombination geschaffen, durch welche die Erfindungsaufgabe in besonders vorteilhafter Weise gelöst wird.

Um Getränkeflaschen mit unterschiedlicher Länge in dem Kühlbehälter axial festlegen zu können, sind als Haltemittel für den Flaschenboden vorzugsweise Federelemente vorgesehen, die die Getränkeflasche an das entsprechende Haltemittel am Flaschenhals andrücken.

Wird das am Flaschenhals vorgesehene Haltemittel als Gabelstütze ausgebildet, kann der Flaschenhals auf einfacher Weise auf einem vorzugsweise an einer Stirnwand im griffgünstigen Endbereich des Kühlbehälters angeordneten Vorsprung gegen Verrutschen gesichert werden.

Durch die Deckelanordnung, die vorzugsweise einen Schiebedeckel und eine Abdeckhaube umfaßt, läßt sich der Kühlbehälter bei nahezu jeder beliebigen Transportlage der Getränkeflasche weitestgehend verschließen, so daß der Flascheninhalt gekühlt bleibt. Der Schiebedeckel läßt sich nahezu vollständig aus dem Überdeckungsbereich der Behälteröffnung in Richtung des griffungünstig gelegenen Endbereichs des Kühlbehälters verschieben.

Um die Kühlung ohne übermäßige Wärmeverluste auch bei stehender Getränkeflasche aufrechtzuerhalten, weist die Abdeckhaube eine elastisch aufweitbare bzw. verengbare Durchtrittsöffnung auf, durch die die Getränkeflasche in den Kühlbehälter von oben eingestellt oder herausgenommen werden kann. Bei stehender Getränkeflasche schmiegt sich der die Durchtrittsöffnung begrenzende Bereich der Abdeckhaube an den Flaschenhals an, so daß die Behälteröffnung weitestgehend verschlossen bleibt.

Durch die trapezförmige Geometrie des Kühlbehälters läßt sich die Getränkeflasche in einfacher Art diagonal fixieren, da der Flaschenboden an der hinteren geneigt angeordneten Stirnwand abgestützt wird. In ihrer stehenden Position stützt sich die Getränkeflasche an der vorderen Stirnwand ab, so daß sie weitgehend kippsicher gehalten ist.

Eine bevorzugte Ausführungsform der Erfindung wird im folgenden anhand der Zeichnung näher erläutert. Dabei zeigen:
- Fig. 1: eine Anordnung eines Kühlbehälters in einer Fondsitzbank in einer Längsschnittdarstellung,
- Fig. 2: eine Einzeldarstellung des Kühlbehälters gemäß Fig. 1 mit einer stehenden Getränkeflasche,
- Fig. 3: eine Schnittdarstellung gemäß der Linie III-III in Fig. 2,
- Fig. 4: eine Schnittdarstellung gemäß der Linie IV-IV in Fig. 3 mit diagonal und stehend gelagerter Getränkeflasche,
- Fig. 5: eine perspektivische Darstellung der diagonal gelagerten Getränkeflasche mit einer Blattfeder und einer Gabelstütze,

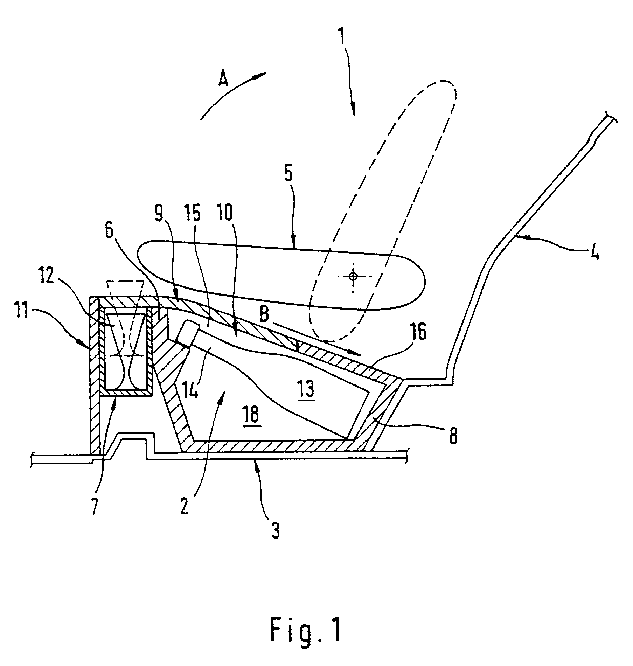

In Fig. 1 ist eine in Fahrtrichtung angeordnete Fondsitzbank 1 mit integriertem Kühlbehälter 2 in einem Längsschnitt entlang der Längsmittenebene eines nicht dargestellten Kraftfahrzeugs schematisch dargestellt.

Die Fondsitzbank 1 ist dabei aus Gründen der Übersichtlichkeit lediglich durch eine den Kühlbehälter 2 tragende Bodenplatte 3, einer geneigt angeordnete Trennwand 4 sowie durch eine schwenkbar gelagerte Armlehne 5 angedeutet.

Der Kühlbehälter 2 weist einen trapezförmigen Längsschnitt auf, wobei an seiner vorderen Stirnwand 6 ein weiterer, nach oben offener Behälter 7 befestigt ist. Mit seiner hinteren Stirnwand 8 liegt der Kühlbehälter 2 an der Trennwand 4 an. Eine Deckelanordnung 9 verschließt sowohl eine nach oben gewandte Behälteröffnung 10 des Kühlbehälters 2 und auch den nach oben offenen Behälter 7, wobei die Deckelanordnung 9 in ihrer geschlossenen Stellung an eine an dem Behälter 7 befestigte Abschlußwand 11 angrenzt.

Für das Öffnen des Kühlbehälters 2 ist es zunächst notwendig, die Armlehne 5 gemäß Pfeilrichtung A in die gestrichelt dargestellte Position hochzuklappen. Die Deckelanordnung 9 kann dann in Pfeilrichtung B aus der Überdeckung mit dem Behälter 7 sowie der Behälteröffnung 10 nach hinten verschoben werden. Bei federnder Lagerung von Trinkgefäßen 12 in dem Behälter 7 werden diese bei geöffneter Deckelanordnung 9 in die gestrichelt dargestellte Position angehoben, so daß sie vom Fahrgast aus gut ergreifbar sind. Ebenfalls bequem erreichbar ist eine diagonal in dem Kühlbehälter 2 abgelegte Getränkeflasche 13, die sich mit ihrem Flaschenhals 14 in einen griffgünstig angeordneten Endbereich 15 des Kühlbehälters 2 nahe der Sitzkissenvorderkante erstreckt.
Der durch den unteren Bereich der Armlehne 5 griffungünstig gelegene Bereich des Kühlbehälters 2 ist mit einer an der Oberseite des Kühlbehälters 2 befestigten Platte 16 abgedeckt.

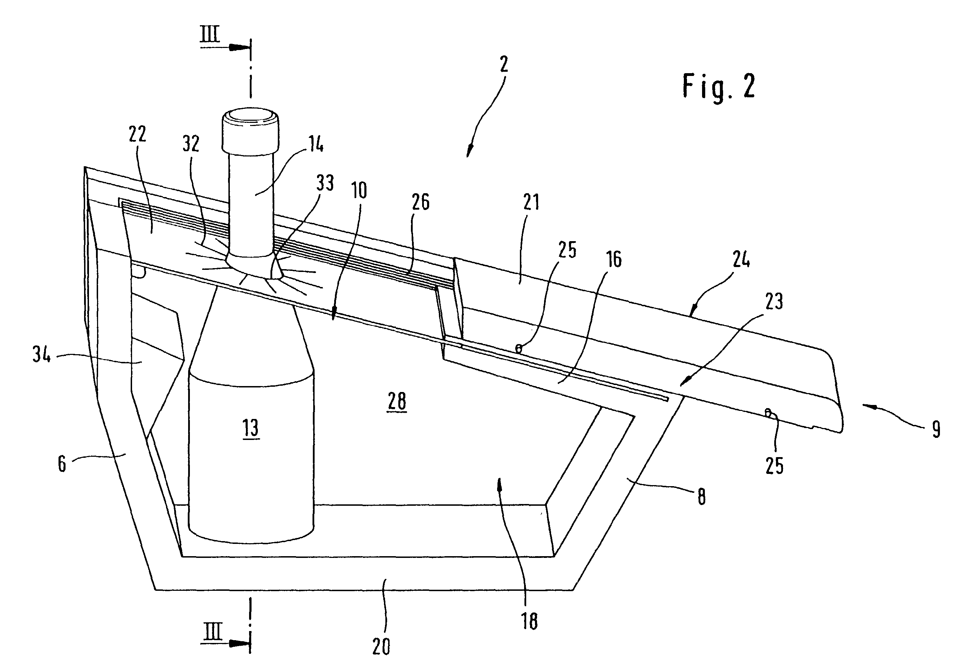

Für eine Erläuterung des Aufbaus und der Funktionsweise des Kühlbehälters 2 ist dieser in Fig. 2 perspektivisch in einer Ansicht von der Seite ohne Seitenwand dargestellt.

Der Kühlbehälter 2 weist neben seinen bereits in der Beschreibung zu Fig. 1 erwähnten Stirnwänden 6 und 8 eine Grundplatte 20 auf, von der sich die beiden Stirnwände 6 und 8 schräg nach oben erstrecken. Durch die verschieden hohen Stirnwände 6 und 8 ergibt sich die geneigte Anordnung der Behälteröffnung 10, die teilweise mit der an der Stirnwand 8 befestigten Platte 16 abgedeckt ist. Für eine gute Isolation des Kühlbehälters 2 sind vorzugsweise alle einen Kühlraum 18 bildenden Behälterwände wärmeisoliert ausgeführt.
Auf der Behälteröffnung 10 ist die Deckelanordnung 9 verschiebebeweglich befestigt. Dabei umfaßt die Deckelanordnung 9 einen Schiebedeckel 21 und eine Abdeckung 22.

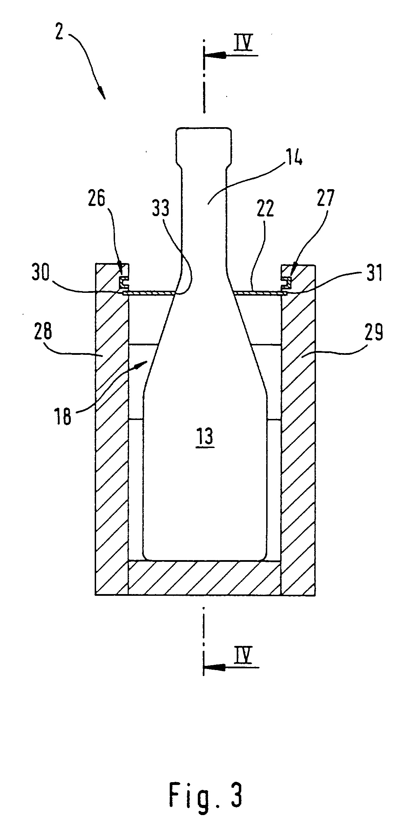

Der Schiebedeckel 21 weist an seinen beiden Längsseiten 23 und 24 Führungsbolzen 25 auf, die, wie insbesondere aus Fig. 3 ersichtlich, in Führungsschienen 26 und 27 geführt werden. Die Führungsschienen 26 und 27 sind an den Innenseiten der Seitenwände 28 und 29 eingelassen.

Die Abdeckung 22 ist ebenfalls schiebegeführt und läßt sich in Führungen 30 und 31 nahezu vollständig in einen dafür vorgesehenen Aufnahmeschacht in der Platte 16 gemäß Pfeilrichtung B verschieben. Die Abdeckung 22 ist aus elastischem Material, so daß sich eine mit strahlenförmig angeordneten Einschnitten 32 versehene Durchtrittsöffnung 33 an den Flaschenhals 14 der nunmehr stehend gelagerten Flasche 13 anschmiegt. Bei Bedarf kann der Fahrgast eine sehr große oder bereits geöffnete Flasche stehend transportieren und in bequemer Art aus dem Kühlbehälter entnehmen und wieder von oben einstellen, ohne daß die Kühlung im Behälter wesentlich beeinträchtigt wird.

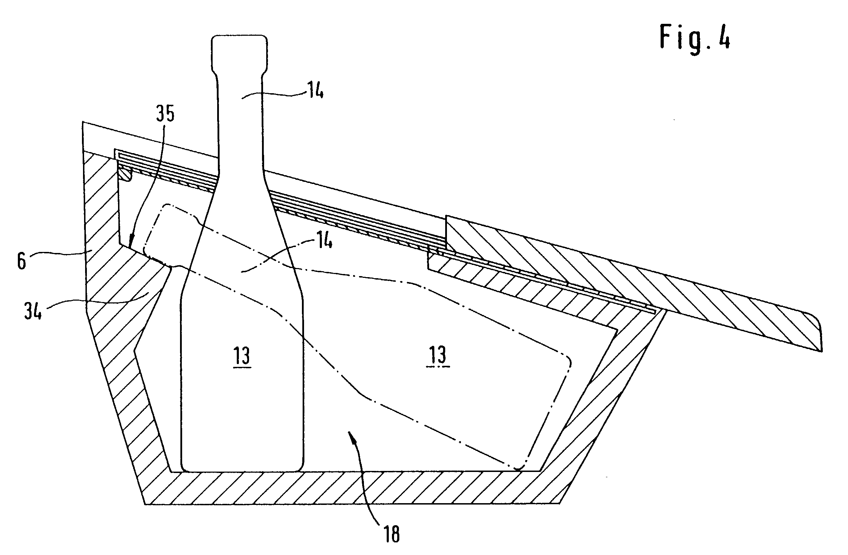

In der Schnittdarstellung in Fig. 4 ist die liniert dargestellte Getränkeflasche 13 wie in den Fig. 2 und 3 stehend gelagert. Die strichpunktiert dargestellte Getränkeflasche 13 ist in diagonaler Lage im Kühlbehälter 2 abgelegt. Dafür ist an der Innenseite der Stirnwand 6 ein Vorsprung 34 vorhanden, der sich stufig in den Kühlraum hinein erstreckt. Die obere Kante 35 verläuft etwa rechtwinklig zur hinteren Stirnwand 8, so daß der Flaschenboden an der hinteren Stirnwand 8 abgestützt wird, während der Flaschenkopf auf dem Vorsprung 34 aufliegt. Wird der Schiebedeckel 21 nunmehr geöffnet, bietet sich der Flaschenhals 14 dem Fahrgast griffgünstig dar. Gleichzeitig können weitere Lebensmittel im Kühlraum aufbewahrt werden, ohne daß die griffgünstige Anordnung beeinträchtigt wird.

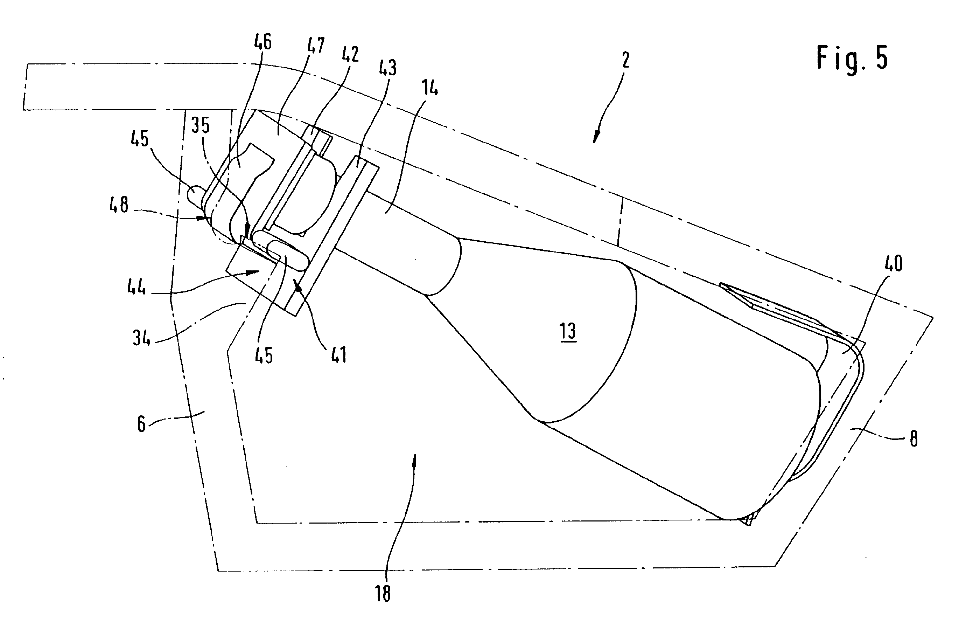

Eine besondere Ausführungsform der Erfindung ist in Fig. 5 dargestellt, wobei der Kühlbehälter 2 lediglich mit Konturen angedeutet ist.
Als Transportsicherung und für unterschiedlich große Getränkeflaschen, deren Fassungsvermögen von 0,3 l bis 1 l betragen kann und die daher die unterschiedlichsten Abmaße aufweisen, sind federnde Haltemittel vorgesehen. Der Flaschenboden wird über eine Blattfeder 40 an der Stirnwand 8 abgestützt. Der Flaschenhals 14 wird von einer Gabelstütze 41 gehalten, die auf der oberen Seite 35 des Vorsprungs 34 aufliegt.
Die Gabelstütze 41 weist zwei Gabeln 42 und 43 auf, die durch einen Träger 44 miteinander verbunden sind. An dem Träger 44 ist quer dazu ein Bügel 45 befestigt, an dem ein mit einer Feder 46 beaufschlagter Flaschenverschluß 47 schwenkbar gelagert ist. Mit einer der gebogenen Form der Feder 46 angepaßten Vertiefung 48 in der vorderen Stirnwand 6 wird die Gabelstütze 41 zusätzlich abgestützt. Die Gabelstütze 41 schützt somit nicht nur gegen Verrutschen der Getränkeflasche 13 auf dem Vorsprung 34, sondern auch gegen das Auslaufen von bereits geöffneten und schwer wiederverschließbaren Getränkeflaschen, wie beispielsweise Sekt- oder Weinflaschen.

Durch den Anpreßdruck der Blattfeder 40 liegt die Gabelstütze 41 sicher zusammen mit der Getränkeflasche 13 auf dem Vorsprung 34. Für unterschiedliche Flaschenhalsdurchmesser können unterschiedlich große Gabelstützen vorgesehen sein.

Die lichte Breite des Kühlraums ist beim beschriebenen Kühlbehälter auf den Durchmesser einer handelsüblichen 1L-Sektflasche abgestimmt. Je nach Bedarf kann die Geometrie des Kühlraums jedoch auch für andere Getränkeflaschen ausgelegt werden. Durch die entsprechenden Haltemittel lassen sich in einfacher Weise auch Flaschen fixieren, die andere Abmaße oder ungewöhnliche Formen aufweisen.

Falls die Platzverhältnisse es zulassen, könnte ein Kühlbehälter zum Transport mehrerer nebeneinander im Kühlraum angeordneter Sektflaschen ausgelegt sein, wobei alle Sektflaschen in gleicher Position griffgünstig gehalten werden können. Ein solcher Kühlbehälter könnte zwei der beschriebenen Deckelanordnungen oder auch eine entsprechend breitere Deckelanordnung aufweisen.

## Patentansprüche

1. Kühlbehälter für Fahrzeuge, der seitlich neben dem Sitzkissen eines Fahrzeugsitzes angeordnet und dessen Kühlraum nach Öffnen eines Deckels von oben durch eine Behälteröffnung zugänglich ist, wobei der Kühlraum mindestens zur Unterbringung einer der Länge nach in ihm abgelegten, handelsüblichen Getränkeflasche ausreicht und eine den Flaschendurchmesser deutlich übersteigende Tiefe aufweist,
**dadurch gekennzeichnet,**
**daß** im Kühlraum (18) des Kühlbehälters (2) Haltemittel (40, 41) angeordnet sind, um die Getränkeflasche (13) unterhalb des geschlossenen Deckels (9) in einer griffbereiten Ablagestellung festzulegen, in der sich die Getränkeflasche (13) mit ihrem Flaschenhals (14) auf einen griffgünstig angeordneten Endbereich des Kühlraums (18) zu schräg nach oben erstreckt.

2. Kühlbehälter für Fahrzeuge, dessen Kühlraum nach Öffnen eines Deckels von oben durch eine Behälteröffnung zugänglich ist, wobei der Kühlraum mindestens zur Unterbringung einer der Länge nach in ihm abgelegten, handelsüblichen Getränkeflasche ausreicht aber zur Unterbringung der stehenden Getränkeflasche unterhalb des geschlossenen Deckels eine zu geringe Tiefe aufweist,
**dadurch gekennzeichnet,**
**daß** als Deckel des Kühlbehälters (2) eine Deckelanordnung (9) vorgesehen ist, mit der in einer geschlossenen Stellung auch die nach oben aus der Behälteröffnung (10) herausstehende Getränkeflasche (13) zumindest weitgehend überdeckt ist.

3. Kühlbehälter nach Anspruch 1,
**dadurch gekennzeichnet,**
**daß** sich die Haltemittel (40, 41) etwa rechtwinklig zur Mittellängsachse der sich in der griffbereiten Ablagestellung befindenden Getränkeflasche (13) erstrecken, wobei für den Flaschenboden und für den Flaschenhals der Getränkeflasche (13) jeweils ein Haltemittel vorgesehen ist.

4. Kühlbehälter nach Anspruch 3,
**dadurch gekennzeichnet,**
**daß** das Haltemittel für den Flaschenboden ein Federelement (40) ist, das auf einer quer zur Mittellängsachse der abgelegten Getränkeflasche (13) verlaufenden Stirnwand (8) des Kühlbehälters (2) abgestützt ist.

5. Kühlbehälter nach Anspruch 4,
**dadurch gekennzeichnet,**
**daß** als die Getränkeflasche(13) axial beaufschlagendes Federelement eine gebogene Blattfeder (40) vorgesehen ist.

6. Kühlbehälter nach Anspruch 3,
**dadurch gekennzeichnet,**
**daß** das Haltemittel für den Flaschenhals der Getränkeflasche (13) eine den Flaschenhals umgreifende Gabelstütze (41) ist, die bei in der Ablagestellung gehaltener Getränkeflasche (13') hinter einem quer zu deren Mittellängsachse verlaufenden Vorsprung (34) im griffgünstig angeordneten Endbereich des Kühlbehälters (2) abgestützt ist.

7. Kühlbehälter nach Anspruch 6,
**dadurch gekennzeichnet,**
**daß** die Gabelstütze (41) einen Flaschenverschluß (47) umfaßt und zusammen mit der Getränkeflasche (13) aus dem Kühlbehälter (2) herausnehmbar ist.

8. Kühlbehälter nach Anspruch 2,
**dadurch gekennzeichnet,**
**daß** die Deckelanordnung (9) einen in Längsrichtung der Behälteröffnung (10) geführten Schiebedeckel (21) umfaßt, der in eine die Behälteröffnung (10) freilegende Offenstellung verschiebbar ist.

9. Kühlbehälter nach Anspruch 2,
**dadurch gekennzeichnet,**
**daß** die Behälteröffnung (10) des Kühlbehälters (2) in der geschlossenen Stellung von einer Abdeckhaube (22) für den vom Flaschenhals (14) durchdrungenen Bereich der Behälteröffnung (10) überdeckt ist.

10. Kühlbehälter nach Anspruch 9,
**dadurch gekennzeichnet,**
**daß** die Abdeckhaube (22) aus biegeelastischem Material besteht und eine Durchtrittsöffnung (33) für den nach oben herausstehenden Flaschenhals (14) der stehenden Getränkeflasche (13) aufweist.

11. Kühlbehälter nach Anspruch 10,
**dadurch gekennzeichnet,**
**daß** die Durchtrittsöffnung (33) in der Abdeckhaube (22) über einen Durchmesserbereich elastisch aufzuweiten oder zu verengen ist.

12. Kühlbehälter nach einem der Ansprüche 1 oder 2,
**dadurch gekennzeichnet,**
**daß** der Kühlbehälter (2) eine viereckige Grundfläche (20) sowie zwei im wesentlichen trapezförmige Seitenwände (28, 29) umfaßt, die durch zwei geneigt zur Grundfläche (20) angeordnete Stirnwände (6, 8) miteinander verbunden sind.

13. Kühlbehälter nach Anspruch 12,
**dadurch gekennzeichnet,**
**daß** der Kühlbehälter (2) unterhalb einer hochklappbaren Armlehne (5) angeordnet und in seinem griffungünstig gelegenen Endbereich durch eine an die Behälteröffnung (10) angrenzende Platte (16) zu einem Kasten geschlossen ist.

14. Kühlbehälter nach einem der Ansprüche 1 oder 2,
**dadurch gekennzeichnet,**
**daß** vom geschlossenen Deckel (9) für die Behälteröffnung (10) ein Aufbewahrungsbehälter (7) für Trinkgefäße (12) mitüberdeckt ist, der nach dem Öffnen des Deckels (9) von oben zugänglich ist.
